# EUROPEAN PATENT APPLICATION

(11) **EP 2 446 745 A1**
(43) Date of publication of application: **02.05.2012**
(21) Application number: 10189495.4
(22) Date of filing: 29.10.2010
(51) Int. Cl.: A21D 2/18, A21D 13/00, A23G 3/54, A23G 3/34, A21D 2/16, A21D 2/26, A21D 2/32, A23L 1/035, A23L 1/09, A23L 1/19

(54) **A savoury composition suitable as filling**

(71) Applicant: Unilever N.V., 3013 AL Rotterdam (NL)
(72) Inventor: Chopra, Ekta, Bangalore 560 066 (IN); Grover, Swarn Singh, Bangalore 560 066 (IN)
(74) Representative: Tjon, Hon Kong Guno

(57) **Abstract**

The present invention relates to a savoury composition. The savoury composition comprises:
a. 26% - 65% by weight maltodextrin,
b. 31% - 80% by weight fat,
c. 0.1-12% by weight thickener selected from polyglycerol fatty acid ester or polyglycerol polycondensed fatty acid ester or vegetable or animal protein or vegetable gum, or cyclodextrin, and;
d. less than 5% by weight water.

## Description

### TECHNICAL FIELD

The present invention relates to savory composition. It particularly relates to savoury composition suitable as a filling.

### BACKGROUND AND PRIOR ART

Filled snacks typically have a filling comprising sugar and/or milk powder and/or vegetable fat such as cocoa fat. However, snacks with savoury fillings are relatively less known.

US4824684 (Frito Lay, 1989) discloses pumpable edible filling prepared from 40-60% vegetable shortening having a Wiley melt point from 90 °F to 120 °F, a 10-40% solids extender and solid flavouring materials. This document discloses that the solid extender may be selected from maltodextrin, pregelatinized and other starches, cellulose powder and milled flour, although the preferred solids extender is said to be whey solids.

US5409719 (Van Den Bergh Foods Co., Division of Conopco Inc., 1995) discloses low-calorie confectionery filling wherein 5-50% fat is present in a fat-continuous emulsion, water phase comprises 10-60% water whilst the remainder (90-40%) consists of: acidity regulator, thickener, bulking agent, emulsifier, sweetener, flavour, colourant, humectant and/or preservative.

US2008/0171128 A1 (Cagampang et al.) discloses a crème filling that is fortified with omega-3 acids and comprises 35-90% fat and 40-85% sweetener. The sweetener is further disclosed to comprise sucrose, confectioner's sugar, glucose, dextrose, fructose, crystalline fructose, lactose, malt syrup, malt syrup solids, rice syrup solids, rice syrup, sorghum syrup, maltose, high fructose corn syrup, honey, molasses, maltodextrin or combinations thereof.

US2001031294A (Nestec SA) discloses a savory snack product comprising two layers of a whipped and baked savory sponge with a filling in-between, the sponge having an a_{w} value of between about 0.6 and 0.85, a pH value of between about 3.5 and 5.5 and a overrun of between about 30 and 170 percent and the filling comprising a water-in-oil emulsion that has an a_{w} value of between about 0.6 and 0.85, a pH of between about 3.5 and 5.5 and an overrun of below about 150 percent. The filling further contains about 30 to 90 percent vegetable fat having a steep melting curve between about 25 and 35 °C. The filling is prepared from maltodextrin or glucose syrup in an amount of up to 40 percent.

Conventional fillings are either black cream based or white cream based. Black creams typically comprise cocoa fats and sugar whilst white creams typically comprise milk powder or milk products and/or sugar. Sugars and or milk/cocoa fat provide good mouthfeel and texture. Conventional black or white creams are relatively unsuitable for savoury snacks as the sugar and/or milk powder (or milk fat or milk protein) and/or cocoa fats impart a certain sweetness or flavour that is not suitable for a savoury snack.

On the other hand, a savoury composition, particularly a savoury composition suitable as a filling needs to satisfy several criteria. The savoury composition needs to be storage stable, particularly at relatively high temperatures. The savoury composition should retain its structural integrity, i.e. the constituent phases should not separate on storage and/or the product retains its shape characteristics or deforms relatively less when allowed to stand. The savoury composition should provide good organoleptic properties, particularly the mouthfeel. The savoury composition also needs to have right rheological properties that allow it to be extrudable or pumpable.

The present inventors have surprisingly found that a savoury composition comprising maltodextrin, fat and a thickener in certain proportions has good organoleptic and rheological characteristics.

### SUNIMARY OF THE INVENTION

According to a first aspect of the invention, there is provided a savoury composition comprising:
a. 26% - 65% by weight maltodextrin,
b. 31% - 80% by weight fat,
c. 0.1-12% by weight thickener selected from the group consisting of polyglycerol fatty acid ester, polyglycerol polycondensed fatty acid ester, vegetable protein, animal protein, vegetable gum, and cyclodextrin, and;
d. less than 5% by weight water.

According to a second aspect of the present invention there is provided a savoury snack comprising an edible wafer topped with the savoury composition of the first aspect.

### DETAILED DESCRIPTION OF THE INVENTION

Different embodiments of the invention may be carried out in using preferred or more preferred conditions (e.g. level of degrees Brix) or ingredients (e.g. levels of citric acid, glutamic acid). Preferred ranges will often be described in the following format: preferably at least x1, more preferably at least x2, even more preferably x3, preferably at most y1, more preferably at most y2, even more preferably at most y3, whereby x1<x2<x3<y3<y2<y1. This format is meant to include the preferred ranges x1 to y1, more preferably x2 to y2 and even more preferably x3 to y3 whereby the endpoints are included and also all subranges subsumed therein (e.g. x1 to y3 and x3 to y1). The same applies when ranges are described in the format "more than x1" or "less than y1" except that the endpoints are not included. Vice versa, when preferred ranges are described as x1 to y1, more preferably x2 to y2 and even more preferably x3 to y3, the endpoints are meant to be included and also all subranges subsumed therein (e.g. x1 to y3 and x3 to y1). In addition, all open ended ranges are meant to be included: preferably at least x1, more preferably at least x2, even more preferably x3, preferably at most y1, more preferably at most y2, even more preferably at most y3.

### Maltodextrin

The savoury composition comprises 26-65% by weight maltodextrin. Maltodextrin is preferably 30-60%, more preferably 35-55% and most preferably 40-50% of the savoury composition.

Maltodextrin is a starch hydrolysate. Dextrose equivalent value (DE) is an indicator of the degree of hydrolysis of starch. It relates to the percentage of the total solids that have been converted to reducing sugars: the higher the DE, the more sugars and less dextrins are present. The percentage of hydrolysis of glycosidic bonds in a substance, particularly maltodextrins, glucose syrups, corn syrups and other starch products, is calculated as dextrose equivalent on a dry weight basis; e.g. if 5-10% of the glycosidic bonds are hydrolysed, the maltodextrin will have a dextrose equivalent of 5-10%. Pure glucose has a dextrose equivalent of 100, pure maltose approximately 50 and starch effectively zero.

Dextrose equivalent (DE) of maltodextrin is preferably in the range 4-30, more preferably 8-20.

### Fat

The term "fat" as used herein means triacylglycerols or triglycerides which are esters of fatty acids with glycerol in a molar ratio of 3 to 1.

term "solid fat" is defined as fat having melting point greater than 25 °C and the term "liquid fat" is defined as fat having melting point less than or equal to 25 °C. The term "fat" includes both liquid fat as well as solid fat.

Liquid fat is preferably selected from vegetable or animal-origin oils, preferably vegetable origin oil. Preferred vegetable oils include sunflower oil, safflower oil, groundnut oil, sesame oil, soyabean oil, mustard oil, and palmolein oil.

Preferred solid fats include partially or completely hydrogenated vegetable oils, fractionated vegetable oils, and animal fats. Particularly preferred solid fats include palm oil and Palm stearin.

The fat in the savoury composition may be a liquid fat, a solid fat or a mixture thereof.

The solid fat is preferably greater than 20%, more preferably greater than 30% or even more preferably greater than 40% of the total fat.

The savoury composition comprises preferably less than 10%, more preferably less than 7% and most preferably less than 5% by weight milk or cocoa fat. It is particularly preferred that the milk or cocoa fats are less than 3% by weight of the savoury composition.

### Thickener

The savoury composition comprises 0.1-12% by weight thickener selected from the group consisting of polyglycerol fatty acid ester, polyglycerol polycondensed fatty acid ester, vegetable protein, animal protein, vegetable gum, and cyclodextrin. Preferably the thickener is selected from polyglycerol fatty acid ester or polyglycerol polycondensed fatty acid ester. More preferably the thickener is polyglycerol polycondensed fatty acid ester. Polyglycerol polyricinoleate is particularly preferred.

The thickener is preferably 0.2-10% more preferably 0.5-8% and most preferably 1-5% of the savoury composition.

Gum is selected from xanthan gum, locust bean gum, gum acacia or guar gum. Vegetable protein may be selected from soya protein or wheat protein. Animal protein may be selected from milk protein, whey protein or gelatin, more preferably milk protein.

### Surfactant

The HLB value of the surfactant is preferably in the range 2-6, more preferably in the range 2.5-5.5 and most preferably in the range 3-5.

The surfactant is preferably selected from lecithin, or sorbitan ester of fatty acid, or mono- di- or poly glyceride of fatty acid.

The term lecithin as used herein includes lecithin and hydroxylated lecithin. Lecithin refers to a compound of general formula C8H17O5NRR', with R and R' being fatty acid. Pure lecithin is a phosphatidyl choline. Lecithins are mixtures of diglycerides of fatty acids linked to the choline ester of phosphoric acid. The lecithins are classed as phosphoglycerides or phosphatides (phospholipids). Commercial lecithin is a mixture of acetone-insoluble phosphatides.

The surfactant is preferably 0.1-8% more preferably 0.15-5% and most preferably 0.2-3% of the savoury composition.

### Water

The savoury composition preferably does not comprise a continuous aqueous phase. The savoury composition comprises less than 5% water. The savoury composition comprises preferably less than 4% water, more preferably less than 2% water and most preferably less than 1% water. Water may be as low as 0% by weight of the composition.

Water activity of the composition is preferably in the range 0.2-0.6, more preferably in the range 0.3-0.5 and most preferably in the range 0.35-0.45.

### Sugar

The term sugar as used herein means a monosaccharide, a disaccharide, a sugar alcohol, or a mixture thereof. Monosaccharide is a chemical compound of general formula CₙH₂ₙOₙ where n = 3-7, and disaccharide is a condensation product of any two identical or different monosaccharides.

The savoury filling composition preferably comprises less than 5% by weight sugar. More preferably sugar is less than 3% by weight sugar. It is particularly preferred that the composition is substantially free of sugar.

### Flavouring agent

A savoury composition preferably comprises 0.5-15% a flavouring agent. The flavouring agent is preferably oil-soluble. Preferred flavouring agents include spices, acidulants, vegetables, flavour enhancers and salt. Spices may include but are not limited to pepper, coriander, red chilli, green chilli, cinnamon, anise. Vegetables preferably include turmeric, ginger, garlic, onion, and tomato. Salt includes sodium chloride, potassium chloride, magnesium chloride, calcium chloride or mixtures thereof. Preferred flavour enhancers include monosodium glutamate, inocene, and guanocine.

### Particle size

Without wishing to be limited by any theory, it is believed that particle size is an important parameter to give acceptable mouthfeel. If the mean particle size is high, the mouthfeel is adversely affected. Compositions with relatively small mean particle size provide smoother mouthfeel. In the savoury composition the mean particle size is preferably less than 100 micron, more preferably less than 75 microns, and most preferably less than 50 micron. It is particularly preferred that the mean particle size is less than 40 microns. There is no particular lower limit for the mean particle size and the mean particle size may be as low as 1 microns. The mean particle size is preferably measured using grindometer or fineness of grind gauge. More preferably the particle size is measured using Hegman gauge according to ASTM D 1210 (ASTM D1210 - 05(2010) Standard Test Method for Fineness of Dispersion of Pigment-Vehicle Systems by Hegman-Type Gage)

### pH

pH of savoury cream is preferably in the range 3-7, more preferably in the range 3.5-6, and most preferably in the range 3.8-5,

### The savoury snack

The savoury filling is preferably a filling or a topping or a dip for a savoury snack.

Preferably, the savoury snack comprises an edible wafer topped with the savoury composition. More preferably the savoury snack comprises the savoury filling sandwiched between a pair of edible wafers.

It is particularly preferred that the savoury snack is in a pillow shaped format comprising a filling of the savoury composition.

### Process for preparation of the savoury composition and the savoury snack

The process for preparation of the savoury composition preferably comprises a step of mixing ingredients of the composition to obtain a blend.

Preferably the process comprises a step of grinding of the blend. The grinding is preferably carried out by roller grinding or by conching the blend. Preferably conching is followed by roller grinding. It is preferred that some part of the fat and liquid flavouring agent, if any, are added during the conching.

Without wishing to be limited by any theory it is believed that the step of grinding results into smaller mean particle size and thus provides a smooth mouthfeel and texture to the savoury cream.

Conching is a process step wherein the blend is ground against a hard surface using one or more rollers. Conching is generally used in chocolate processing industries for refining chocolate i.e. breaking down larger cocoa beans particles to very small size. The step of conching is preferably carried out in a conching machine.

The step of conching is preferably carried out for a duration of 2 to 72 hours, depending on the results desired and the machine type. Conching is carried out with roller temperature preferably in the range 40-90 °C.

The invention will now be demonstrated with help of examples. The examples are for the purpose of illustration only and do not limit the scope of the invention in any manner.

### EXAMPLES

### The process of preparation of the savoury composition

All the ingredients of the savoury composition were mixed together, and the resulting blend was conched for 4 hours with the roller temperature around 80°C. The savory cream is kept warm and liquid through the friction created by the conching machine, which grinds the cream against a hard surface of rollers.

**Table 1: Savoury composition of Example 1**

| **Ingredient** | **Source** | **Weight (%) in the composition** |
|---|---|---|
| Sunflower Oil | Kamani Oil, India | 25.40 |
| Refined Palm Oil | Vegetable oil supplies, Malaysia | 21.49 |
| Palsgaard® 6155 | DSM | 1.17 |
| Lecithin | DSM | 0.29 |
| Vitamin E | Kemin, India | 0.21 |
| Malto Dextrin | Riddhi Siddhi Industries, India | 41.91 |
| Flavoring mix | IFF, India | 9.52 |
| TOTAL | | 100.00 |

| | | |
|---|---|---|
| DE value of maltodextrin used was 10-12 DE. | | |

### Evaluation of the savoury composition

Viscosity values were measured at 60 rpm using spindle no 63 in Brookfield viscometer.

Tasting Panel - Tasting panel of seven trained panelists rated the products for mouthfeel and taste.

Product Stability is determined as follows. Product was kept in 100 mL glass beaker. The beaker was immersed in water bath to maintain temperature of 40 °C. After 60 minutes, the contents of the beaker are visually observed. The rating is recorded as stable when there is no phase separation, and as liquid when liquid floats on top.

**Table 2: Evaluation results of the composition of Example 1**

| Taste | Good |
|---|---|
| Mouth feel | Good |
| Product stability at 40 C | Stable |
| Brook field viscosity @ 45°C (cP) | 2180 |
| Brook field viscosity @ 55°C (cP) | 1770 |

### Effect of amount of maltodextrin in the savoury composition

Maltodextrin amounts were varied in the starting formulation of Example 1. The deviations from the composition of Example 1 are tabulated below, along with the results of evaluation.

**Table 3: Effect of amount of maltodextrin in the savoury composition**

| Composition | Example 2 | Example 3 | Example 4 | Example 5 |
|---|---|---|---|---|
| Maltodextrin (%) | 75 | 50 | 40 | 15 |
| Refined palm oil (solid fat) | 6.3 | 17.8 | 22.4 | 33.8 |
| Sunflower oil | 7.5 | 21 | 26.4 | 40 |

| Evaluation Results | | | | |
|---|---|---|---|---|
| Taste | Powdery, NA | Sweet, A | A, Good | very oily, NA |
| Mouth feel | very powdery | Good | good | oily |
| Product stability at 40 °C | stable | stable | stable | liquid |
| Overall rating | NA | A | A | NA |
| Viscosity @ 45°C (cP) | NM | 5549 | 2110 | NM |
| Viscosity @ 55°C (cP) | NM | 5379 | 1800 | NM |

| | | | | |
|---|---|---|---|---|
| A - Acceptable NA - Not acceptable NM - Not measured | | | | |

Maltodextrin at level of 40% and 50% in the composition provide acceptable taste, mouthfeel, stability and overall rating. The savoury composition comprising 40% maltodextrin provides better rheological characteristics as indicated by viscosity values as compared to the savoury composition comprising 50% maltodextrin. Savoury composition comprising very low (15%) or very high (75%) maltodextrin are not acceptable.

### Effect of amount of fat

Fat amounts were varied in the starting formulation of Example 1. The deviations from the composition of Example 1 are tabulated below, along with the results of evaluation.

**Table 4: Effect of amount of maltodextrin in the savoury composition**

| Composition | Example 6 | Example 7 | Example 8 | Example 9 | Example 10 |
|---|---|---|---|---|---|
| Sunflower oil | - | 15 | - | 25.4- | |
| Refined Palm Oil | 30 | 33.76 | 40 | 50 | 85 |
| Maltodextrin | 58.8 | 40 | 48.8 | 13.4 | 3.8 |

| Evaluation Results | | | | | |
|---|---|---|---|---|---|
| Taste | Powdery, NA | A, Good | A, slightly powdery | A, but hard | NA, Oily & hard |
| Mouth feel | powdery | good | good | good | oily |
| Product stability at 40 °C | stable | stable | stable | stable | very liquid |
| Overall rating | NA | A | A | A | NA |
| Viscosity @ 45°C (cP) | NM | 2100 | 2879 | NM | NM |
| Viscosity @ 55°C (cP) | NM | 2140 | 2609 | NM | NM |

The savoury compositions comprising fat in a range within the scope of the present invention provide acceptable properties as compared to savoury compositions comprising fat at a level outside the scope of the present invention. Secondly, mixture of solid and liquid fat provides relatively better rheological characteristic as indicated by lower viscosity as compared to savoury compositions comprising solid fat alone.

### Effect of amount of lecithin

Lecithin amounts were varied in the starting formulation of Example 1. The deviations from the composition of Example 1 are tabulated below, along with the results of evaluation.

**Table 5: Effect of amount of lecithin in the savoury composition**

| Composition | Example 1 | Example 11 | Example 12 | Example 13 | Example 14 |
|---|---|---|---|---|---|
| Lecithin | 0.00 | 0.25 | 1 | 3.00 | 15.00 |
| Maltodextrin | 42.17 | 41.9 | 41.17 | 39.17 | 27.17 |
| Taste | A | A | A | A, pale yellow | A, but dark yellow |

| Evaluation Results | | | | | |
|---|---|---|---|---|---|
| Mouth feel | good | good | good | good | good |
| Product stability at 40 °C | stable | stable | stable | stable | stable |
| Overall rating | A | A | A | A | NA |
| Viscosity @ 45°C (cP) | 2359 | NM | 1900 | 1880 | NM |
| Viscosity @ 55°C (cP) | 2150 | NM | 1780 | 1200 | NM |

Savoury compositions comprising lecithin at a level that is within the scope of the present invention have improved rheological characteristics as compared to savoury composition without lecithin as indicating by lower values of viscosity. However, addition of too much lecithin (15%) in a savoury composition results into yellowish colour that is not preferable.

### Effect of amount of polyglycerol polyricinoleate (PGPR) Palsgaard

PGPR amounts were varied in the starting formulation of Example 1. The deviations from the composition of Example 1 are tabulated below, along with the results of evaluation.

**Table 6: Effect of amount of PGPR in the savoury composition**

| | Example 15 | Example 16 | Example 17 | Example 18 |
|---|---|---|---|---|
| Palsgaard | 0 | 1.5 | 4 | 15 |
| Maltodextrin | 43.1 | 41.58 | 39.08 | 22.98 |
| Taste | A | A | A | A |
| Mouth feel | good | good | good | good |
| Product stability at 40 °C | liquid | stable | stable | Liquid |
| Overall rating | NA | A | A | NA |
| Viscosity @ 45°C (cP) | NM | NM | 1630 | 299 |
| Viscosity @ 55°C (cP) | NM | NM | 1110 | 190 |

Savoury compositions comprising thickener at a level that is within the scope of the present invention provide acceptable overall rating. Absence of thickener results into a or addition of too much thickener (15%) results into compositions that exhibit phase separation.

## Claims

1. A savoury composition comprising:
a. 26% - 65% by weight maltodextrin,
b. 31% - 80% by weight fat,
c. 0.1-12% by weight thickener selected from the group consisting of polyglycerol fatty acid ester, polyglycerol polycondensed fatty acid ester, vegetable protein, animal protein, vegetable gum, and cyclodextrin, and;
d. less than 5% by weight water.

2. A savoury composition as claimed in claim 1 comprising a surfactant having HLB value in the range 2-6.

3. A savoury composition as claimed in claim 1 or claim 2 wherein said surfactant is selected from lecithin, or sorbitan ester of fatty acid, or mono- di- or poly glyceride of fatty acid.

4. A savoury composition as claimed in any one of the preceding claims wherein said surfactant is 0.05-10% by weight of the composition.

5. A savoury composition as claimed in any one of the preceding claims wherein said surfactant is lecithin.

6. A savoury composition as claimed in any one of the preceding claims wherein said thickener is selected from polyglycerol fatty acid ester or polyglycerol polycondensed fatty acid ester.

7. A savoury composition as claimed in any one of the preceding claims comprising less than 4% by weight water.

8. A savoury composition as claimed in any one of the preceding claims comprising 40-50% by weight said fat.

9. A savoury composition as claimed in any one of the preceding claims comprising less than 5% milk or cocoa fat.

10. A savory composition as claimed in any one of the preceding claims comprising less than 10% sugar.

11. A savory composition as claimed in any one of the preceding claims wherein the mean particle size is less than 100 micron.

12. A savoury composition as claimed in any one of preceding claims wherein pH of 1% aqueous dispersion of said composition is from 3-7.

13. A savoury snack comprising an edible wafer topped with the savoury composition according to any one of the preceding claims.

14. A savoury snack as claimed in claim 13 comprising the savoury filling composition of claim 1 sandwiched between a pair of edible wafers.
